# EUROPEAN PATENT APPLICATION

(11) **EP 4 793 836 A1**
(43) Date of publication of application: **19.08.2026**
(21) Application number: 26155942.1
(22) Date of filing: 03.02.2026
(51) Int. Cl.: G06N 10/20, G06N 10/60

(54) **COMPUTER PROGRAM, ENERGY LEVEL DIFFERENCE ESTIMATION METHOD, AND QUANTUM COMPUTING SYSTEM**

(30) Priority: 13.02.2025 JP 2025021306
(71) Applicant: FUJITSU LIMITED, Kawasaki-shi, Kanagawa 211-8588 (JP); QunaSys Inc., Bunkyo-ku Tokyo 113-0001 (JP)
(72) Inventor: MATSUMOTO, Norifumi, Kawasaki-shi, 211-8588 (JP); NAKAGAWA, Yuya, Tokyo, 113-0001 (JP); HIDAKA, Yuichiro, Tokyo, 113-0001 (JP)
(74) Representative: Haseltine Lake Kempner LLP

(57) **Abstract**

A processing unit causes a quantum computer to execute a quantum circuit including a first-polarity first control gate and a second-polarity second control gate, each controlled by an auxiliary qubit. The first control gate applies a first time-evolution operator corresponding to a Hamiltonian H(λ) to a qubit group corresponding to a quantum state |ψ>. The second control gate applies a second time-evolution operator corresponding to H(λ + δλ) to the qubit group. The processing unit acquires, from the quantum computer, a probability amplitude corresponding to an event that a result of applying the two types of time-evolution operators to the quantum state |ψ> matches |ψ>. The processing unit acquires a cumulative distribution function for an energy level difference between H(λ) and H(λ + δλ) by executing discrete Fourier transform using the probability amplitude, and estimates the difference based on the cumulative distribution function.

## Description

### FIELD

The disclosure relates to a computer program, an energy level difference estimation method, and a quantum computing system.

### BACKGROUND

In a quantum computer, errors easily occur in qubit states due to environmental noise or the like. In a qubit error correction technique (quantum error correction), information is made redundant and encoded. In order to realize quantum error correction at a practical level, a large number of qubits, e.g., about one million qubits, are used. On the other hand, currently available quantum computers remain noisy intermediate-scale quantum computers (NISQs) having several hundred qubits at the maximum, which are not capable of error correction.

A quantum computer capable of performing error correction is referred to as "fault-tolerant quantum computer (FTQC)". It is expected that small-scale FTQCs will be realized relatively early, and are referred to as "early-FTQC".

One of the typical tasks for which quantum computers are suitably used is simulation of a quantum many-body system. Simulation of a quantum many-body system may be used for estimation of an eigenenergy, for example.

There has been proposed a method of estimating a ground-state energy by statistical phase estimation using an early FTQC. There has also been proposed a method of extending the energy estimation method to estimation of an expected value of a general physical quantity. There has also been proposed a method for improving the efficiency of a quantum amplitude estimation algorithm in a system including a classical computer and a quantum computer. There has also been proposed a method referred to as "Bayesian phase difference estimation (BPDE)" using a large-scale FTQC. See, for example, the following literatures.
U.S. Patent Application Publication No. 2023/0081927
U.S. Patent Application Publication No. 2024/0112063
International Publication Pamphlet No. WO 2020/252425
Japanese Laid-open Patent Publication No. 2023-39444
L. Lin, Y. Tong, "Heisenberg-Limited Ground-State Energy Estimation for Early Fault-Tolerant Quantum Computers", [online], February 2, 2022, Physical Review Journal, PRX Quantum 3, 010318, [searched on January 20, 2025], Internet <URL: https://journals.aps.org/prxquantum/abstract/10.1103/PRXQu antum.3.010318>
K. Sugisaki and five others, "Bayesian phase difference estimation: a general quantum algorithm for the direct calculation of energy gaps", Physical Chemistry Chemical Physics 23, 20152-20162, 2021
K. Sugisaki and five others, "Quantum Algorithm for Numerical Energy Gradient Calculations at the Full Configuration Interaction Level of Theory", The Journal of Physical Chemistry Letters, 13, 11105-11111, 2022

For a quantum many-body system, a Hamiltonian H = H(λ) including a certain parameter λ is considered. The parameter λ represents, for example, an electric field, a magnetic field, a nuclear spin moment, or a nuclear position. The energy level corresponding to the Hamiltonian H(λ) is represented by E(λ). By computing the derivative (= dE(λ)/dλ) of the energy level corresponding to a minute change of the parameter λ, it is possible to obtain the response of the system to the minute change of the parameter λ. Therefore, it is conceivable to compute the derivative of the energy level by using a quantum computer.

The derivative of the energy level may be approximated by a finite difference. Therefore, in order to approximate the derivative by a finite difference, for example, two energy levels E(λ) and E(λ + δλ) may be individually estimated by statistical phase estimation using a quantum computer, and the difference (= E(λ + δλ) - E(λ)) therebetween may be computed. Here, δλ represents a minute change amount of the parameter λ.

However, the minute difference is generally several orders of magnitude smaller than the energy levels. In order to estimate such a difference smaller than the energy level by several orders of magnitude with guaranteed accuracy, very high accuracy is needed for the estimation of the energy levels. The above-described methods have a problem in that the depth of a quantum circuit executed by a quantum computer becomes enormous in order to estimate the energy levels with high accuracy.

### SUMMARY

It is desirable to reduce the depth of a quantum circuit.

In one aspect, there is provided a computer program that causes a computer to execute a process including: causing a quantum computer or a quantum circuit simulator to execute a quantum circuit including a first Hadamard gate that acts on an auxiliary qubit, a first control gate controlled by the auxiliary qubit, has a first polarity, and applies a first time-evolution operator corresponding to a first Hamiltonian including a predetermined parameter to a qubit group corresponding to a quantum state of a target system, a second control gate controlled by the auxiliary qubit, has a second polarity opposite to the first polarity, and applies a second time-evolution operator corresponding to a second Hamiltonian, to which change of the parameter of the first Hamiltonian has been applied, to the qubit group, a second Hadamard gate that acts on the auxiliary qubit, and measurement of the auxiliary qubit; acquiring, as an execution result of the quantum circuit by the quantum computer or the quantum circuit simulator, a probability amplitude corresponding to an event that a result of applying the first time-evolution operator and the second time-evolution operator to the quantum state matches the quantum state; performing a discrete Fourier transform using the probability amplitude to acquire a cumulative distribution function for an energy level difference between the first Hamiltonian and the second Hamiltonian; and estimating the difference based on the cumulative distribution function.

### BRIEF DESCRIPTION OF DRAWINGS

The invention is described, by way of example only, with reference to the following drawings, in which:
FIG. 1 is a diagram illustrating a quantum computing system according to a first embodiment;
FIG. 2 is a diagram illustrating an example of a quantum computing system according to a second embodiment;
FIG. 3 is a diagram illustrating a hardware example of the quantum computing system;
FIG. 4 is a diagram illustrating an example of a quantum circuit;
FIG. 5 is a diagram illustrating a functional example of the quantum computing system;
FIG. 6 is a flowchart illustrating a processing example of the quantum computing system;
FIG. 7 is a flowchart illustrating continuation of the processing example of the quantum computing system;
FIG. 8 is a diagram illustrating an example of a binary search on a cumulative distribution function;
FIG. 9 is an example of a procedure of the binary search;
FIG. 10 is a diagram illustrating an example of an antiferromagnetic Heisenberg model;
FIG. 11 is a diagram illustrating an example of a cumulative distribution function;
FIG. 12 is a diagram a modification of the quantum circuit of the second embodiment; and
FIG. 13 is a diagram illustrating a quantum circuit according to a comparative example.

### DESCRIPTION OF EMBODIMENTS

Hereinafter, embodiments will be described with reference to the drawings.

### [First Embodiment]

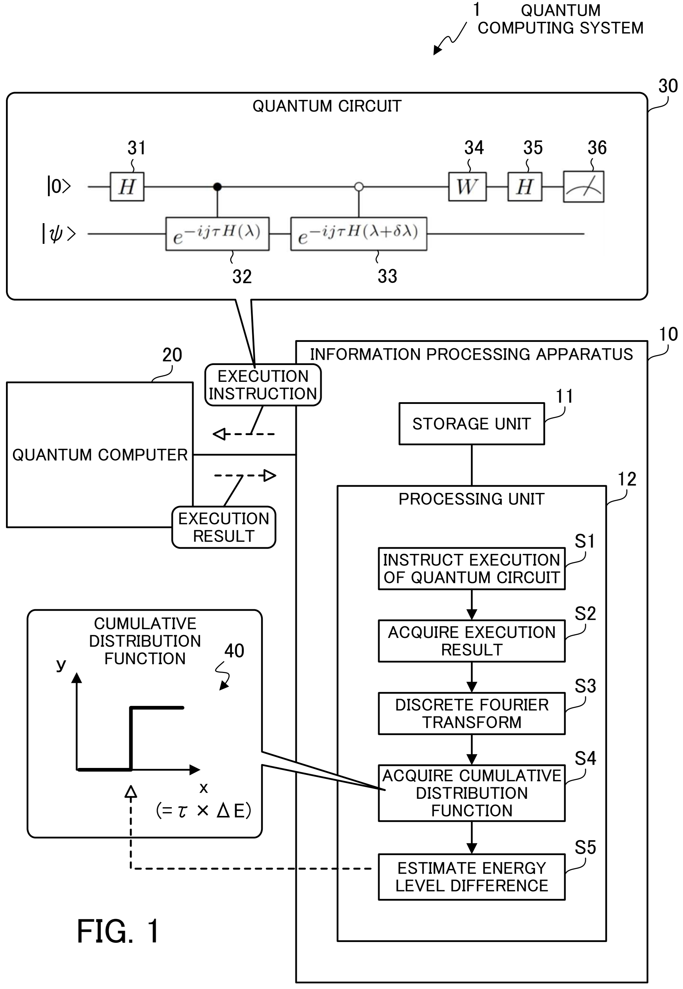

FIG. 1 is a diagram illustrating a quantum computing system according to a first embodiment. This quantum computing system 1 includes an information processing apparatus 10 and a quantum computer 20. The information processing apparatus 10 may be referred to as "classical computer" or "von Neumann computer". The information processing apparatus 10 includes a storage unit 11 and a processing unit 12. The quantum computer 20 is, for example, an early FTQC.

The storage unit 11 may be a volatile semiconductor memory such as a random access memory (RAM), or may be a non-volatile storage such as a hard disk drive (HDD) or a flash memory. The processing unit 12 is, for example, a processor such as a central processing unit (CPU), a graphics processing unit (GPU), or a digital signal processor (DSP). However, the processing unit 12 may include a special-purpose electronic circuit such as an application specific integrated circuit (ASIC) or a field programmable gate array (FPGA). The processor executes a program stored in a memory (or the storage unit 11) such as a RAM. A plurality of processors may be referred to as "multiprocessor" or simply as "processor".

The quantum computer 20 executes quantum computation using qubits. The individual qubit is a unit of information that is able to take a superposition state of a |0> state and a |1> state. When a qubit is measured, the state of the qubit stochastically changes to |0> or |1>. By measuring the state of a qubit a plurality of times, it is possible to estimate the state of the qubit before the measurement, based on the appearance probabilities of |0> and | 1>.

The quantum computing system 1 may include an apparatus having a quantum circuit simulator, instead of the quantum computer 20. In this case, the quantum computing system 1 performs the following processing using the quantum circuit simulator, instead of the quantum computer 20. The quantum circuit simulator is software or hardware that simulates execution of a quantum circuit in the quantum computer 20. The apparatus having the quantum circuit simulator is, for example, a classical computer.

The quantum computing system 1 advances the computation by changing the state of an individual qubit, and obtains the computation result by statistically processing the measurement results of a plurality of computations. These qubits are able to change to desired states by causing predetermined quantum gates to act the qubits.

The order of quantum gates that act on the individual qubits such that the quantum computer 20 executes quantum computation may be modeled by a quantum circuit. The quantum circuit corresponds to a program indicating a quantum operation procedure. The quantum computer 20 performs quantum gate operations on the qubits according to the quantum circuit, and measures the final states of the qubits. The measurement results are statistically processed by the information processing apparatus 10.

The quantum computing system 1 estimates, for a Hamiltonian having a certain parameter, a difference in energy level with respect to a minute change of the parameter. A Hamiltonian H(λ) having a parameter λ is expressed by Equation (1), for example. $H \left(λ\right) = {H}_{0} + λ V$

H₀ is a term that does not depend on A. V is an element representing a contribution to H based on λ. However, H(λ) may be expressed by an equation different from Equation (1). The energy level of the eigenstate corresponding to the Hamiltonian H(λ) is represented by E(λ).

For example, by considering the derivative of the energy level, it is possible to obtain the response of the system to the minute change of the parameter. Estimation of the derivative of the energy level is often used particularly in molecular systems. The measurement of the response of a system to an external field, such as an electric or magnetic field, corresponds to an experimentally natural situation. A derivative with respect to a nuclear position is also used in molecular dynamics.

For example, when λ represents an electric field, by differentiating an energy level with respect to the electric field, an electric dipole moment is obtained as the response of the system. When λ represents a magnetic field, by differentiating an energy level with respect to the magnetic field, a magnetic dipole moment is obtained as the response of the system. When λ represents a nuclear spin moment, by differentiating an energy level with respect to the nuclear spin moment, a hyperfine coupling constant is obtained as the response of the system. When λ represents a nuclear position, by differentiating the energy level with respect to the nuclear position, a force acting on the atomic nucleus is obtained as the response of the system.

The derivative of the energy level is approximated by a finite difference. The simplest method is to use the lowest-order expression represented by Equation (2). The accuracy of the approximation is improved by using a higher-order general expression. $\frac{d E \left(λ\right)}{dλ} ≃ \frac{E \left(λ+δλ\right) - E \left(λ\right)}{δ λ}$

Thus, the quantum computing system 1 directly estimates an energy level difference ΔE = E(λ + δλ) - E(λ) as follows. It is possible to generalize the difference to be estimated to a forward difference, a backward difference, a central difference, or a higher-order difference.

The processing unit 12 generates information about the quantum circuit 30. The quantum circuit 30 includes a first Hadamard gate 31, a first control gate 32, a second control gate 33, a quantum gate 34, a second Hadamard gate 35, and a measurement 36. A Quantum gate operation is sequentially performed from the left side of the quantum circuit 30.

An auxiliary qubit is initialized to |0>. The first Hadamard gate 31 acts on the auxiliary qubit.

The first control gate 32 is a control unitary gate controlled by the auxiliary qubit. The first control gate 32 has, for example, a positive polarity. That is, the first control gate 32 acts on, for example, the positive polarity (|1>) of the auxiliary qubit. In the quantum circuit 30, the positive polarity is represented by a black circle. The first control gate 32 applies a first time-evolution operator e^{-ijτH (λ)} to a qubit group corresponding to a quantum state |ψ> of the target system. The first time-evolution operator e^{-ijτH(λ)} is a time-evolution operator corresponding to the first Hamiltonian H(λ) including the predetermined parameter A. "i" included in the index is an imaginary unit. τ is the time step of the time evolution. Here, j is an integer by which τ is multiplied. Here, j is j ∈ [-d, d]. Here, d is the truncation order of a discrete Fourier transform described below. Here, d is a positive integer, which is determined in advance based on τ and the target error for the energy level difference.

The second control gate 33 is a control unitary gate controlled by the auxiliary qubit. The second control gate 33 has, for example, a negative polarity. That is, the second control gate 33 acts on, for example, the negative polarity (|0>) of the auxiliary qubit. In the quantum circuit 30, the negative polarity is represented by a white circle. The second control gate 33 applies a second time-evolution operator e^{-ijτH(λ+δλ)} to the qubit group of the target system. The second time-evolution operator e^{-ijτH(λ+δλ)} is a time-evolution operator corresponding to the second Hamiltonian H(λ + δλ). The second Hamiltonian H(λ + δλ) is a Hamiltonian obtained by applying the change δλ of the parameter λ to the first Hamiltonian H(λ). It may also be said that the auxiliary qubit is the control bit of each of the first control gate 32 and the second control gate 33.

The quantum gate 34 acts on the auxiliary qubit. The quantum gate 34 is denoted "W". The quantum gate 34 is an I gate or an S^{†} gate. The I gate is an identity gate. The quantum gate 34 being an I gate is equivalent to the quantum circuit 30 not including the quantum gate 34. S^{†} is a phase shift gate that performs a shift operation of -n/2 rotation in the Z-axis direction. By switching to either W = I or W = S^{†}, the real part and the imaginary part of the probability amplitude measured by the quantum circuit 30 are switched. When W = I, the real part of the probability amplitude is measured. When W = S^{†}, the imaginary part of the probability amplitude is measured.

The second Hadamard gate 35 acts on the auxiliary qubit. The measurement 36 represents measurement of the auxiliary qubit. In the measurement 36, the measurement of the auxiliary qubit is performed for each of the cases of W = I and W = S^{†} as described above. The measurement may be referred to as "measurement operation".

The processing unit 12 instructs the quantum computer 20 to execute the quantum circuit 30, and causes the quantum computer 20 to execute the quantum circuit 30 (step S1). The quantum circuit 30 is implemented for various values of j. The processing unit 12 acquires a probability amplitude <ψ|e^{ijτH(λ+δλ)}e^{-ijτH(λ)} |ψ> in Equation (3) as the execution result of the quantum circuit 30 by the quantum computer 20 (step S2). $\begin{matrix}\left〈ψ\right| {e}^{ijτH \left(λ+δλ\right)} {e}^{- ijτH \left(λ\right)} \left|ψ\right〉 \\ = {\sum }_{mn} {e}^{- i \left[{jτE}_{m}\left(λ\right)-{jτE}_{n}\left(λ+δλ\right)\right]} \\ \times \left〈ψ\left|{E}_{n}\left(λ+δλ\right)\right.\right〉 \left〈{E}_{n}\left(λ+δλ\right)\left|{E}_{m}\left(λ\right)\right.\right〉 \left〈{E}_{m}\left(λ\right)\left|ψ\right.\right〉\end{matrix}$

The probability amplitude in Equation (3) is a probability amplitude corresponding to an event that a result of applying the first time-evolution operator and the second time-evolution operator to the quantum state |ψ> of the target system matches the original quantum state |ψ>.

For example, the processing unit 12 acquires the real part of the probability amplitude in Equation (3) by causing the quantum computer 20 to execute the quantum circuit 30 in which W = I for a certain j. Further, the processing unit 12 acquires the imaginary part of the probability amplitude in Equation (3) by causing the quantum computer 20 to execute the quantum circuit 30 in which W = S^{†} for this j.

The number of samples for the individual probability amplitude is determined in advance based on the degree of overlap between the initial state |ψ> and the eigenstate of the Hamiltonian and the failure probability allowed for the estimation of the difference between the energy levels.

The processing unit 12 executes discrete Fourier transform using the acquired probability amplitude (step S3). Specifically, the processing unit 12 uses a Heaviside step function F. The step function F is a step function having a period of 2π. The step function F is expressed by Equation (4). $F \left(x\right) = \left\{\begin{matrix}1 , & x ∈ \left[2kπ,\left(2k+1\right)π\right) \\ 0 , & x ∈ \left[\left(2k-1\right)π,2kπ\right)\end{matrix}\right.$

In Equation (4), k is an integer. The step function F is equivalent to a normal step function in an interval of x ∈ (-π, π).

The processing unit 12 multiplies the probability amplitude by a discrete Fourier expansion coefficient F^ⱼ of the step function to execute the discrete Fourier transform. "F^" indicates a character obtained by adding a hat "^" to the top of F. In the discrete Fourier transform, only orders less than or equal to the truncation order d are considered. The discrete Fourier transform is expressed by Equation (5). $\begin{matrix}{C}^{˜} \left(x\right) = {\sum }_{\left|j\right| \leq d} {\hat{F}}_{j} {e}^{ijx} \left〈ψ\right| {e}^{ijτH \left(λ+δλ\right)} {e}^{- ijτH \left(λ\right)} \left|ψ\right〉 \\ = {\sum }_{mn} \left(F∗δ\right) \left(x-τ\left[{E}_{m}\left(λ\right)-{E}_{n}\left(λ+δλ\right)\right]\right) \\ \times \left〈ψ\left|{E}_{n}\left(λ+δλ\right)\right.\right〉 \left〈{E}_{n}\left(λ+δλ\right)\left|{E}_{m}\left(λ\right)\right.\right〉 \left〈{E}_{m}\left(λ\right)\left|ψ\right.\right〉\end{matrix}$

C^{~}(x) gives a good approximation of the cumulative distribution function for the energy level difference under the assumption of δλ << 1. That is, the contribution of the component of m ≠ n in Equation (5) becomes 0, and Equation (6) is obtained. Note that "C^{~}" indicates a character obtained by adding a tilde "~" to the top of C. ${C}^{˜} \left(x\right) ≃ {\sum }_{k} {\left|\left〈{E}_{k}\left(λ\right)\left|ψ\right.\right〉\right|}^{2} \left(F∗δ\right) \left(x-τ\left[{E}_{k}\left(λ\right)-{E}_{k}\left(λ+δλ\right)\right]\right)$

In this way, the processing unit 12 acquires the cumulative distribution function C^{~}(x) for the energy level difference by executing the discrete Fourier transform using the probability amplitude (step S4). A cumulative distribution function 40 is an example of the cumulative distribution function C^{~}. The x-axis of the cumulative distribution function represents τ × ΔE. The y-axis of the cumulative distribution function represents the value of the cumulative distribution function C^{~}. More specifically, the y-axis represents the cumulative value of the contribution ratio of each level included in the input state. The processing unit 12 estimates an energy level difference ΔEₖ from the position where the value of C^{~}(x) rapidly increases (step S5). ΔEₖ is expressed by Equation (7). $Δ {E}_{k} = {E}_{k} \left(λ\right) - {E}_{k} \left(λ+δλ\right)$

Specifically, the processing unit 12 is able to compute the energy level difference ΔEₖ by dividing the value of the x coordinate of the position where the value of C^{~}(x) rapidly increases by τ. Note that a rapid increase in C^{~}(x) is equivalent to a peak in the derivative of C^{~}(x).

Here, it is possible to selectively estimate a specific energy level difference ΔE_{k_0} by determining an initial state |ψ> so that Equation (8) is satisfied. "k_0" indicates "k₀". $\left|\left〈{E}_{{k}_{0}}\left(λ\right)\left|ψ\right.\right〉\right| ≃ 1$

In the quantum circuit 30, the first control gate 32 may have a negative polarity, and the second control gate 33 may have a positive polarity. In this case, the processing unit 12 inverts the positive or negative sign of the energy level difference finally obtained. In this way, it is possible to obtain a result equivalent to that in the case where the first control gate 32 has a positive polarity and the second control gate 33 has a negative polarity. As described above, when the first control gate 32 has the first polarity, the second control gate 33 has the second polarity opposite to the first polarity. The first polarity is a positive polarity or a negative polarity. The second polarity is a negative polarity or a positive polarity.

With the information processing apparatus 10 according to the first embodiment, the quantum circuit 30 is executed by the quantum computer 20. However, as described above, a quantum circuit simulator may be used, instead of the quantum computer 20. The quantum circuit 30 includes, in this order, the first Hadamard gate 31, the first control gate 32, the second control gate 33, the second Hadamard gate 35, and the measurement 36 of the auxiliary qubit. As the execution result of the quantum circuit 30, a probability amplitude corresponding to an event that a result of applying the first time-evolution operator e^{-ijτH(λ)} and the second time-evolution operator e^{-ijτH(λ+δλ)} to the quantum state |ψ> of the target system matches the quantum state |ψ> is acquired. By executing discrete Fourier transform using the probability amplitude, the cumulative distribution function C^{~}(x) for the energy level difference between the first Hamiltonian H (λ) and the second Hamiltonian H(λ + δλ) is acquired. The energy level difference is estimated based on the cumulative distribution function C^{~}(x). In this way, the information processing apparatus 10 is able to reduce the depth of the quantum circuit. Specifically, assuming that D is the maximum depth needed in the quantum circuit 30, D is proportional to the truncation order d. d and D are represented by Equation (9). $\begin{matrix}d ∝ {\left(τ{ϵ}_{Δ {E}_{k}}\right)}^{- 1} \geq \frac{3}{π} {\left(\frac{{ϵ}_{Δ {E}_{k}}}{Δ {E}_{k}}\right)}^{- 1} \\ ⇒ D ∝ {\left(τ{ϵ}_{Δ {E}_{k}}\right)}^{- 1} \geq \frac{3}{π} {\left(\frac{{ϵ}_{Δ {E}_{k}}}{Δ {E}_{k}}\right)}^{- 1} ∵ D ∝ d\end{matrix}$

ε_{ΔE_k} is a target error for ΔEₖ. As represented by Equation (9), a conditional expression for D is obtained from the conditional expression for d.

Here, as a comparative example, a method of individually obtaining E(λ) and E(λ + δλ) by statistical phase estimation (SPE) and computing E(λ + δλ) - E(λ) based on the individual result is considered. For SPE, please refer to "Heisenberg-Limited Ground-State Energy Estimation for Early Fault-Tolerant Quantum Computers" described above, for example. When the individual energy level is obtained by SPE, for example, a probability amplitude <φ₀ |e^{-ijτH} | φ₀> is measured by a quantum circuit according to a comparative example. This circuit differs from the quantum circuit 30 in that the circuit does not include the second control gate 33. The quantum circuit according to the comparative example will be described below. |φ₀> is the quantum state of the target system. Based on the probability amplitude <φ₀ | e^{-ijτH} | φ₀> and the Fourier component of the Heaviside step function F, the discrete Fourier transform in Equation (10) is performed. $C \left(x\right) = {\sum }_{\left|j\right| \leq d} {\hat{F}}_{j} {e}^{ijx} \left〈{ϕ}_{0}\left|{e}^{- ijτH}\right|{ϕ}_{0}\right〉$

C(x) in Equation (10) is a good approximation of the cumulative distribution function, that is, the convolution product of a state density p(x) and F. The state density p(x) is expressed by Equation (11). The convolution product of p(x) and F is expressed by Equation (12). $p \left(x\right) = {\sum }_{k} {p}_{k} δ \left(x-{τE}_{k}\right)$ $C ≃ \left(F∗p\right) \left(x\right)$

pₖ indicates an overlap l<φₖ|φ₀>|² between an eigenstate |φₖ> and the initial state lφ₀> of the energy level Eₖ.

The value of the cumulative distribution function C(x) rapidly increases by pₖ at the position x = τEₖ corresponding to the energy level. Therefore, it is possible to read the estimated value of the energy level Eₖ from the position where C(x) rapidly increases.

Here, in SPE, there is a constraint represented by Equation (13). $\left|{τE}_{k}\right| \leq \frac{π}{3}$

In SPE, the truncation order d proportional to the maximum depth D of the quantum circuit needs to satisfy Equation (14) . $d ∝ {\left(τϵ\right)}^{- 1}$

ε is a target error for the estimation target. When Eₖ(λ) and Eₖ(λ + δλ) are individually estimated by the method according to the comparative example and when ΔEₖ = Eₖ(λ) - E(λ + δλ) is computed, the truncation order d needs to satisfy Equation (15). $d ∝ {\left(τ{ϵ}_{Δ {E}_{k}}\right)}^{- 1} \geq \frac{3}{π} {\left(\frac{Δ {E}_{k}}{\left|{E}_{k}\right|}\right)}^{- 1} {\left(\frac{{ϵ}_{Δ {E}_{k}}}{Δ {E}_{k}}\right)}^{- 1}$

ε_{ΔE_k} is a target error for ΔEₖ. The minute difference ΔEₖ is generally several orders of magnitude smaller than the energy level Eₖ. That is, Equation (16) holds. $\frac{Δ {E}_{k}}{\left|{E}_{k}\right|} ≪ {10}^{- 1}$

According to Equations (15) and (16), in the method according to the comparative example, the depth D(∝d) larger by several orders of magnitude than the reciprocal (ε_{ΔE_k}/ΔEₖ) ^ (-1) of the target relative accuracy is needed.

Therefore, the information processing apparatus 10 directly estimates the energy level difference ΔE, using the quantum circuit 30. When ΔE is directly estimated, the depth D needed for the quantum circuit 30 is expressed by Equation (9). Comparing Equation (9) with Equation (15), Equation (9) does not include a factor having several orders of magnitude represented by Equation (17). Therefore, according to the information processing apparatus 10, the depth of the quantum circuit is reduced by several orders of magnitude, as compared with the technique according to the comparative example. ${\left(\frac{Δ {E}_{k}}{\left|{E}_{k}\right|}\right)}^{- 1} ≫ {10}^{1}$

Here, the condition of the depth D needed in the method according to the comparative example is expressed by Equation (18) based on Equation (15). $D ∝ {\left(τ{ϵ}_{Δ {E}_{k}}\right)}^{- 1} \geq \frac{3}{π} {\left(\frac{Δ {E}_{k}}{\left|{E}_{k}\right|}\right)}^{- 1} {\left(\frac{{ϵ}_{Δ {E}_{k}}}{Δ {E}_{k}}\right)}^{- 1}$

As represented by Equation (18), the reason why the depth D becomes enormous in the method according to the comparative example is that "the energy level needs to be estimated with very high relative accuracy in order to estimate a difference smaller by several orders of magnitude with guaranteed accuracy".

Here, the larger the time step τ is, the smaller the needed depth D∝(τε_{ΔE_k}) ^ (-1) will be. When the energy level is estimated by the method according to the comparative example, the constraint on τ based on Equation (13) is expressed by Equation (19). $τ \leq \frac{π}{3} {\left|{E}_{k}\right|}^{- 1}$

On the other hand, the constraint on τ when the energy level difference is directly estimated is expressed by Equation (20). $τ \leq \frac{π}{3} {\left(Δ{E}_{k}\right)}^{- 1}$

Comparing the Equations (19) and (20), in the direct estimation of the energy level difference, the restriction on τ is significantly relaxed compared to the method according to the comparative example. That is, with the information processing apparatus 10, it is possible to increase τ by several orders of magnitude as indicated by the extent represented by Equation (17), compared with the method according to the comparative example. As a result, the information processing apparatus 10 is able to reduce the depth D needed for the quantum circuit 30.

### [Second Embodiment]

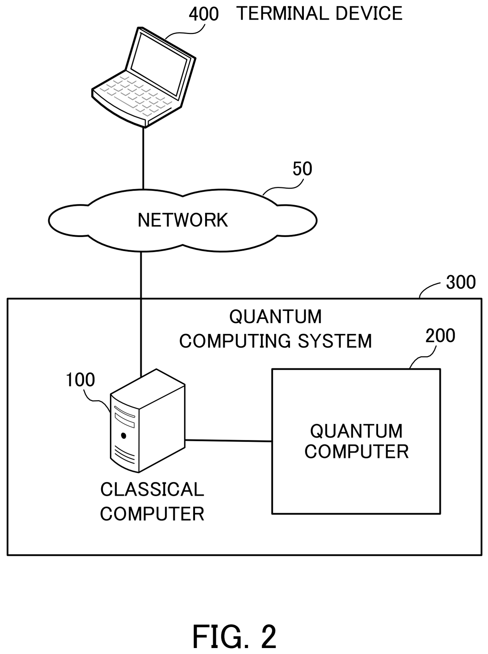

FIG. 2 is a diagram illustrating an example of a quantum computing system according to a second embodiment. This quantum computing system 300 is a hybrid computer system in which a classical computer 100 and a quantum computer 200 operate in cooperation with each other. The classical computer 100 is also referred to as "von Neumann computer".

A terminal device 400 is connected to the classical computer 100 via a network 50. The terminal device 400 is a computer used by a user who requests quantum computation by the quantum computing system 300. The classical computer 100 may receive information indicating a quantum circuit from the terminal device 400. The quantum circuit indicates the order of qubit operations based on arrangement of elements such as gates. An individual qubit is a bit capable of representing a state of superposition of a state of "0" and a state of "1".

The classical computer 100 instructs the quantum computer 200 to control the qubits according to the quantum circuit. The classical computer 100 acquires the measurement result of each qubit from the quantum computer 200. The classical computer 100 is an example of the information processing apparatus 10 according to the first embodiment.

The quantum computer 200 includes a plurality of qubits and a device for manipulating each of the plurality of qubits. The plurality of qubits included in the quantum computer 200 are realized by, for example, superconducting qubit devices. The qubits may be realized by a qubit device of another system such as an ion trap system. The quantum computer is, for example, an early FTQC.

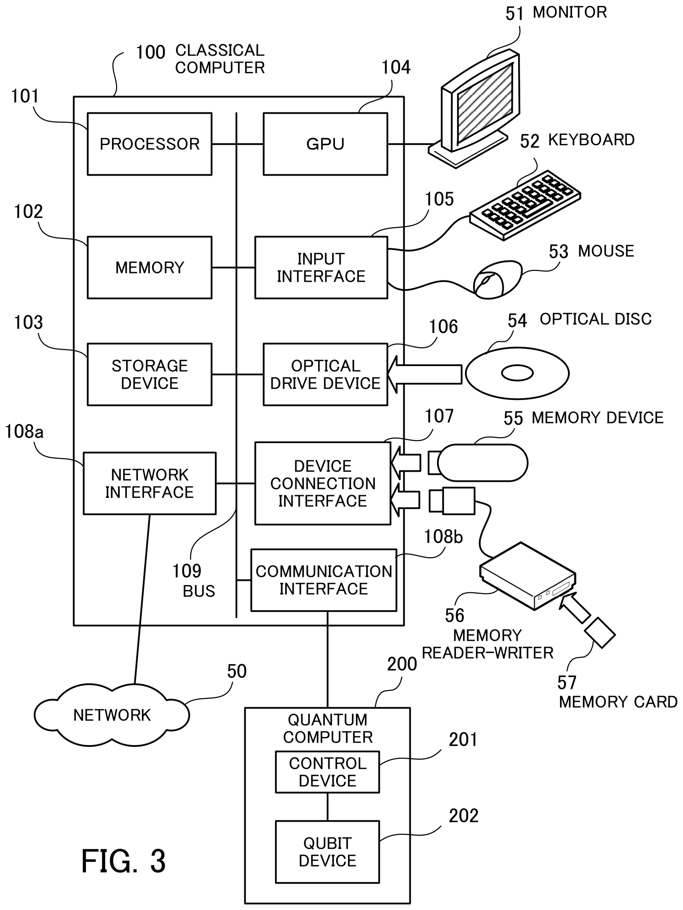

FIG. 3 is a diagram illustrating a hardware example of the quantum computing system. The entire classical computer 100 is controlled by a processor 101. A memory 102 and a plurality of peripheral devices are connected to the processor 101 via a bus 109. The processor 101 may be a multiprocessor. The processor 101 is, for example, a CPU, a micro processing unit (MPU), or a DSP. At least a part of the functions realized by the processor 101 executing a program may be realized by an electronic circuit such as an ASIC or a programmable logic device (PLD). A processor that executes a certain process among a plurality of processes executed by the classical computer 100 may be different from a processor that executes a process different from the certain process among the plurality of processes. At least some of the processes described below may be executed in parallel using a plurality of processors or processor cores. The processor 101 may be referred to as "processor circuitry". The processor 101 is an example of the processing unit 12 according to the first embodiment.

The memory 102 is used as a main storage device of the classical computer 100. The memory 102 temporarily stores at least part of the operating system (OS) programs and application programs to be executed by the processor 101. The memory 102 also stores various data used for processing by the processor 101. As the memory 102, for example, a volatile semiconductor storage device such as a RAM is used.

Examples of the peripheral devices connected to the bus 109 include a storage device 103, a GPU 104, an input interface 105, an optical drive device 106, a device connection interface 107, a network interface 108a, and a communication interface 108b.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, an HDD or a solid state drive (SSD) may be used. The memory 102 or the storage device 103 is an example of the storage unit 11 according to the first embodiment.

The GPU 104 is an arithmetic unit that performs image processing. The GPU 104 is an example of a graphic controller. A monitor 51 is connected to the GPU 104. The GPU 104 displays an image on the screen of the monitor 51 in accordance with an instruction from the processor 101. Examples of the monitor 51 include a display device using organic electro luminescence (EL) and a liquid crystal display device.

A keyboard 52 and a mouse 53 are connected to the input interface 105. The input interface 105 transmits signals sent from the keyboard 52 and the mouse 53 to the processor 101. The mouse 53 is an example of a pointing device, and other pointing devices may also be used. Examples of these other pointing devices include a touch panel, a tablet, a touch pad, and a track ball.

The optical drive device 106 reads data recorded on the optical disc 54 or writes data to the optical disc 54, using laser light or the like. The optical disc 54 is a portable recording medium on which data is recorded so as to be readable by reflection of light. The optical disc 54 may be a digital versatile disc (DVD), a DVD-RAM, a compact disc read-only memory (CD-ROM), a CD-recordable (CD-R), CD-rewritable (CD-RW), or the like.

The device connection interface 107 is a communication interface for connecting peripheral devices to the classical computer 100. For example, a memory device 55 and a memory reader-writer 56 may be connected to the device connection interface 107. The memory device 55 is a recording medium having a function of communicating with the device connection interface 107. The memory reader-writer 56 is a device that writes data to a memory card 57 or reads data from the memory card 57. The memory card 57 is a card-type recording medium.

The network interface 108a is connected to the network 50. The network interface 108a transmits and receives data to and from other computers or communication devices via the network 50. The network interface 108a is a wired communication interface connected to a wired communication device such as a switch or a router via a cable. Further, the network interface 108a may be a wireless communication interface connected to and communicating with a wireless communication device such as a base station or an access point by radio waves.

The communication interface 108b is an interface for connecting to the quantum computer 200. The processor 101 transmits a quantum circuit to the quantum computer 200 via the communication interface 108b, and causes the quantum computer 200 to execute quantum computation. The processor 101 acquires the result of the quantum computation via the communication interface 108b.

The classical computer 100 realizes its processing function according to the second embodiment with the hardware as described above. The information processing apparatus 10 described in the first embodiment may also be implemented by hardware similar to that of the classical computer 100 illustrated in FIG. 3.

The classical computer 100 realizes its processing function according to the second embodiment by executing a program recorded in a computer-readable recording medium, for example. The program describing the processing contents to be executed by the classical computer 100 may be recorded in various recording media. For example, a program to be executed by the classical computer 100 may be stored in the storage device 103. The processor 101 loads at least a part of the programs in the storage device 103 into the memory 102 and executes the program. The program to be executed by the classical computer 100 may be recorded in a portable recording medium such as the optical disc 54, the memory device 55, or the memory card 57. The program stored in the portable recording medium becomes executable after being installed in the storage device 103 under the control of the processor 101, for example. Alternatively, the processor 101 may read the program directly from the portable recording medium and may execute the program.

The quantum computer 200 includes a control device 201 and a qubit device 202. The control device 201 performs gate operations on the qubits in the qubit device 202 according to the quantum circuit. The qubit device 202 has a plurality of qubits. The qubit device 202 is, for example, one or a plurality of quantum processing units (QPUs).

The quantum computing system 300 efficiently estimates, for a Hamiltonian H(λ) having a parameter λ, a difference in energy level with respect to a minute change δλ of the parameter λ.

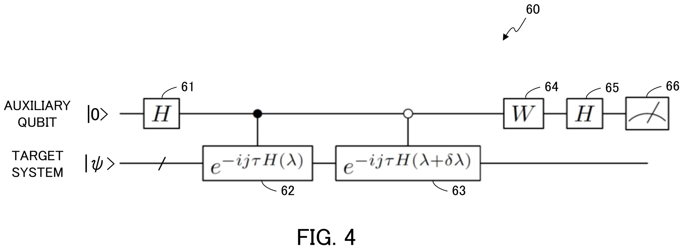

FIG. 4 is a diagram illustrating an example of a quantum circuit. The quantum computing system 300 uses the quantum circuit 60 to obtain the probability amplitude <ψ|e^{ijτH(λ+δλ)}e^{-ijτH(λ)}|ψ> in Equation (3).

The quantum circuit 60 includes a Hadamard gate 61, control gates 62 and 63, a quantum gate 64, a Hadamard gate 65, and a measurement 66. A quantum gate operation is performed sequentially from the left side of the quantum circuit 60, that is, sequentially from the Hadamard gate 61 to the measurement 66.

An auxiliary qubit is initialized to |0>. The Hadamard gate 61 acts on the auxiliary qubit. The auxiliary qubit is also referred to as "ancilla".

The control gate 62 is a positive polarity control unitary gate controlled by the auxiliary qubit. The control gate 62 applies a time-evolution operator e^{-ijτH(λ)} to a qubit group corresponding to a quantum state |ψ> of the target system.

The control gate 63 is a negative polarity control unitary gate controlled by the auxiliary qubit. The control gate 63 applies a time-evolution operator e^{-ijτH(λ+δλ)} to the qubit group of the target system.

The quantum gate 64 acts on the auxiliary qubit. The quantum gate 64 is represented by "W". W = I or W = S^{†}. W = I means that the quantum gate 64 is an I gate. W = I is equivalent to inserting nothing at the position of the quantum gate 64. That is, W = I is equivalent to the quantum circuit 60 not including the quantum gate 64. W = S^{†} means that the quantum gate 64 is an S^{†} gate.

The Hadamard gate 65 acts on the auxiliary qubit.

The measurement 66 is a projective measurement in the computational basis on the auxiliary qubit. When W = I, the real part of the probability amplitude in Equation (3) is measured. When W = S^{†}, the imaginary part of the probability amplitude in Equation (3) is measured.

The polarity of the control gate 62 and the polarity of the control gate 63 may be reversed. That is, the control gate 62 may have a negative polarity, and the control gate 63 may have a positive polarity. Further, the control gates 62 and 63 may be represented by one control gate equivalent to the functions of both the control gates 62 and 63.

Here, application of e^{-ijτH} to the qubit group corresponds to |j| times of application of e^{-iτH}. Therefore, the depth of the quantum circuit 60 increases as the value of |j| of the control gates 62 and 63 increases. The upper limit of |j| is the truncation order d of the discrete Fourier transform.

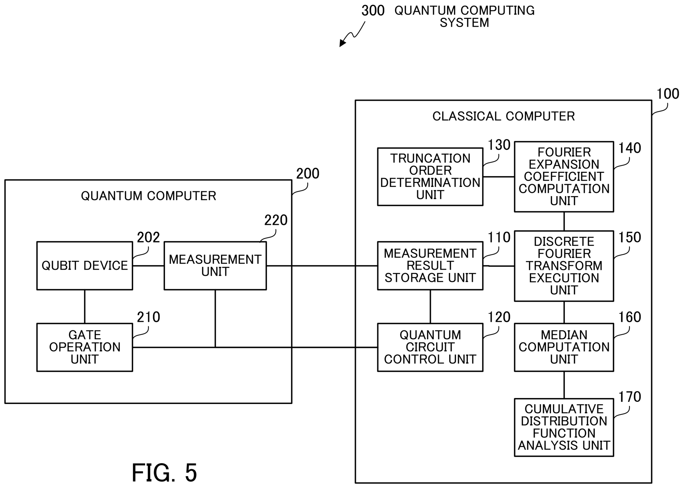

FIG. 5 is a diagram illustrating a functional example of the quantum computing system. The quantum computer 200 includes a gate operation unit 210 and a measurement unit 220. The gate operation unit 210 performs gate operations on the qubits in the qubit device 202. The gate operation unit 210 performs a gate operation on the individual qubit according to a gate operation instruction from the classical computer 100. For example, the gate operation unit 210 illuminates an individual qubit with a microwave corresponding to a quantum gate to be applied to this qubit. The measurement unit 220 is realized by a device that measures the state of the individual qubit in the qubit device 202. The measurement unit 220 illuminates, for example, a qubit to be measured with a microwave, and performs a projective measurement in the computational basis.

The classical computer 100 includes a measurement result storage unit 110, a quantum circuit control unit 120, a truncation order determination unit 130, a Fourier expansion coefficient computation unit 140, a discrete Fourier transform execution unit 150, a median computation unit 160, and a cumulative distribution function analysis unit 170. As the measurement result storage unit 110, storage areas of the memory 102 and the storage device 103 are used. The quantum circuit control unit 120, the truncation order determination unit 130, the Fourier expansion coefficient computation unit 140, the discrete Fourier transform execution unit 150, the median computation unit 160, and the cumulative distribution function analysis unit 170 are each implemented by the processor 101 executing a program. The program is stored in the memory 102.

The measurement result storage unit 110 stores the probability amplitude measurement results based on the quantum circuit 60. The k-th measurement result of the probability amplitude is denoted Zₖ. Zₖ = Xₖ + iYₖ. i included in Zₖ is an imaginary unit. Xₖ is the real part of Zₖ. Yₖ is the imaginary part of Zₖ. The measurement result storage unit 110 holds the value of j used for the measurement of Zₖ in association with the probability amplitude Zₖ.

The quantum circuit control unit 120 generates information about the quantum circuit 60 with respect to a Hamiltonian H(λ) and a minute change δλ. Input information including the Hamiltonian H(λ) and the minute change δλ is input to the classical computer 100 in advance. The input information may be input to the classical computer 100 by the terminal device 400. When generating the information about the quantum circuit 60, the quantum circuit control unit 120 selects an integer j included in the time-evolution operator based on the truncation order d of the discrete Fourier transform described below, and generates the quantum circuit 60 based on the selected j.

The quantum circuit control unit 120 controls the qubit device 202 based on the quantum circuit 60. That is, the quantum circuit control unit 120 transmits information about the quantum circuit 60 to the quantum computer 200, and instructs the quantum computer 200 to execute the quantum circuit 60. Thus, the quantum circuit 60 is executed by the quantum computer 200. In response to the execution of the quantum circuit 60 by the quantum computer 200, the measurement result of the probability amplitude by the measurement unit 220 is stored in the measurement result storage unit 110.

The truncation order determination unit 130 determines the truncation order d of the discrete Fourier transform. The truncation order d is determined based on Equation (21). $d = O \left[{τ}^{- 1}{ϵ}_{Δ E}^{- 1}log\left({τ}^{- 1}{ϵ}_{Δ E}^{- 1}{η}^{- 1}\right)\right]$

τ is the time width of the time evolution. ε_{ΔE} is a target error for the energy level difference. η is a parameter defined so as to satisfy both Equation (22) and Equation (23) with respect to an overlap η~ between the eigenstate of the Hamiltonian H and the initial state |ψ>. τ, ε_{ΔE}, and η are included in the input information. $η < {η}^{˜}$ ${η}^{˜} - η ≳ O \left(δ{λ}^{1}\right)$

The input information further includes an allowable value v for the failure probability of the estimation of the energy level difference. ν and η are used to determine parameters N_{b} and Nₛ that determine the number of samples for the probability amplitude. N_{b} is determined based on Equation (24). Nₛ is determined based on Equation (25). ${N}_{b} = O \left[log\left({ν}^{- 1}\right)\right]$ ${N}_{s} = O \left({η}^{- 2}\right)$

N_{b} is the number of blocks used when the samples for the probability amplitude are divided into blocks. One trial result of the discrete Fourier transform is obtained for one block. The final result of the discrete Fourier transform is obtained from the median of the trial results corresponding to the blocks. Nₛ is the number of samples included in one block.

The truncation order determination unit 130 outputs the determined truncation order d to the quantum circuit control unit 120 and the Fourier expansion coefficient computation unit 140.

The Fourier expansion coefficient computation unit 140 computes discrete Fourier expansion coefficients F^ᵢ of the Heaviside step function F expressed by Equation (4). The range of the integer ᵢ in F^ᵢ is -d ≤ i ≤ d.

The discrete Fourier transform execution unit 150 executes the discrete Fourier transform using the measurement result of the probability amplitude stored in the measurement result storage unit 110 and using the discrete Fourier expansion coefficients of the step function F. Specifically, the discrete Fourier transform execution unit 150 multiplies Zₖ in the measurement result by e^{iarg(F^_k)} to execute the discrete Fourier transform in Equation (26). F^ₖ in Equation (26) is a discrete Fourier expansion coefficient of an order corresponding to j used to measure Zₖ. ${G}_{r} = \frac{{\sum }_{\left|j\right| \leq d} \left|{\hat{F}}_{j}\right|}{{N}_{s}} {\sum }_{k = \left(r-1\right) {N}_{s} + 1}^{{rN}_{s}} {Z}_{k} {e}^{ikx + i arg \left({\hat{F}}_{k}\right)}$

i included in the index is an imaginary unit. Here, r is the identification number of the block. The discrete Fourier transform execution unit 150 computes Gᵣ for each block based on Equation (26). Gᵣ is a function of x. Gᵣ is one trial result of the discrete Fourier transform.

An expected value <Gᵣ> for the random variable {F^ⱼ} of Gᵣ reproduces the result of the discrete Fourier transform. <Gᵣ> is expressed by Equation (27). $\begin{matrix}\left〈{G}_{r}\right〉 = \frac{{\sum }_{\left|j\right| \leq d} \left|{\hat{F}}_{j}\right|}{{N}_{s}} {N}_{s} {\sum }_{k = - d}^{d} \frac{\left|{\hat{F}}_{d}\right|}{{\sum }_{\left|j\right| \leq d} \left|{\hat{F}}_{j}\right|} {Z}_{k} {e}^{ikx + i arg \left({\hat{F}}_{k}\right)} \\ = {\sum }_{k = - d}^{d} {\hat{F}}_{k} {Z}_{k} {e}^{ikx}\end{matrix}$

The median computation unit 160 estimates the cumulative distribution function C^{~}(x) from the medians of the generated N_{b} samples of Gᵣ. C^{~}(x) is expressed by Equation (6). For N_{b} samples of Gᵣ = Gᵣ (x), the median computation unit 160 obtains C^{~}(x) by setting a median among N_{b} values of Gᵣ (xₐ) for each value xₐ of the variable x as a value of C^{~} (xₐ) for the value xₐ.

The cumulative distribution function analysis unit 170 reads a parameter point x* at which the value of the cumulative distribution function C^{~}(x) rapidly increases. For example, the cumulative distribution function analysis unit 170 determines x* that satisfies the conditions in Equation (28) and Equation (29) by binary search. ${C}^{˜} \left(x*+τ{ϵ}_{Δ E}\right) > \frac{η}{2}$ ${C}^{˜} \left(x*-τ{ϵ}_{Δ E}\right) < η$

The cumulative distribution function analysis unit 170 estimates the energy level difference ΔE by dividing x* by τ. The cumulative distribution function analysis unit 170 outputs the energy level difference ΔE. The cumulative distribution function analysis unit 170 may display an image indicating ΔE on the monitor 51. The cumulative distribution function analysis unit 170 may transmit information indicating ΔE to the terminal device 400.

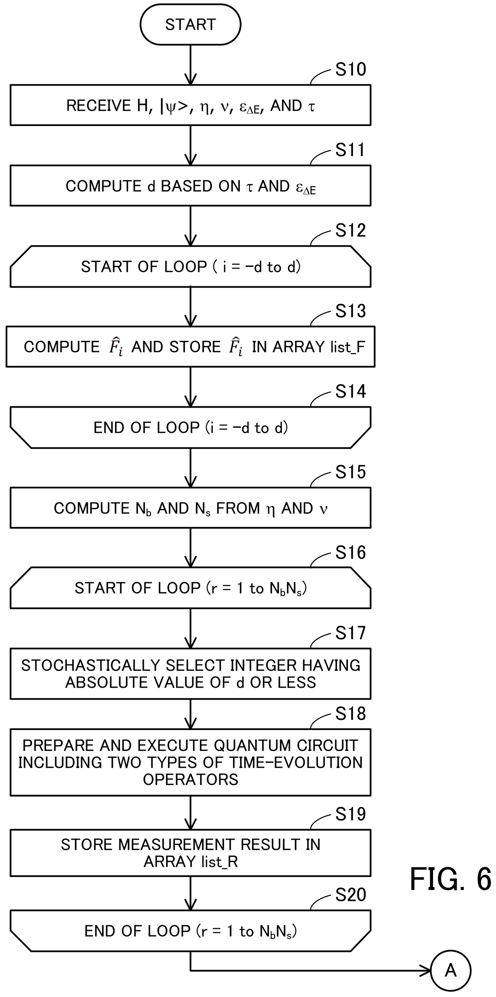

FIG. 6 is a flowchart illustrating a processing example of the quantum computing system.

(S10) The quantum circuit control unit 120 receives input of H, |ψ>, η, ν, εΔ_{E}, and τ . H, |ψ>, η, ν, ε_{ΔE}, τ are included in the input information that is input to the classical computer 100. Here, τ is determined in advance based on, for example, an approximate estimation result of Δ_{Ek} and Equation (20). τ may be computed based on Equation (20) by the quantum circuit control unit 120 or the truncation order determination unit 130.

(S11) The truncation order determination unit 130 computes the truncation order d in Equation (21) based on τ and ε_{ΔE}.

(S12) The Fourier expansion coefficient computation unit 140 starts a loop including step S13 for i = -d to d.

(S13) The Fourier expansion coefficient computation unit 140 computes the discrete Fourier expansion coefficients F^ᵢ of the step function F and stores the computed discrete Fourier expansion coefficients F^i in an array list_F.

(S14) The Fourier expansion coefficient computation unit 140 ends the loop for i = -d to d.

(S15) The quantum circuit control unit 120 computes N_{b} and Nₛ from η and ν. N_{b} is computed based on Equation (24). Nₛ is computed based on Equation (25).

(S16) The quantum circuit control unit 120 starts a loop including steps S17 to S19 for r = 1 to N_{b}Nₛ.

(S17) The quantum circuit control unit 120 stochastically selects an integer j having an absolute value of d or less. Specifically, the quantum circuit control unit 120 selects an integer j ∈ [-d, d] with a probability proportional to |F^ⱼ |.

(S18) The quantum circuit control unit 120 prepares a quantum circuit 60 including two types of time-evolution operators and causes the quantum computer 200 to execute the quantum circuit 60. The two types of time-evolution operators are the time-evolution operator e^{-ijτH(λ)} and the time-evolution operator e^{-ijτH(λ+δλ)} described above.

(S19) The quantum circuit control unit 120 stores the measurement result of the probability amplitude Zᵣ based on the execution of the quantum circuit 60 in an array list_R held in the measurement result storage unit 110. The quantum circuit control unit 120 stores the value of j used for the measurement of Zr in the measurement result storage unit 110 in association with the probability amplitude Zᵣ.

(S20) The quantum circuit control unit 120 ends the loop for r = 1 to N_{b}Nₛ. Next, the process proceeds to step S21.

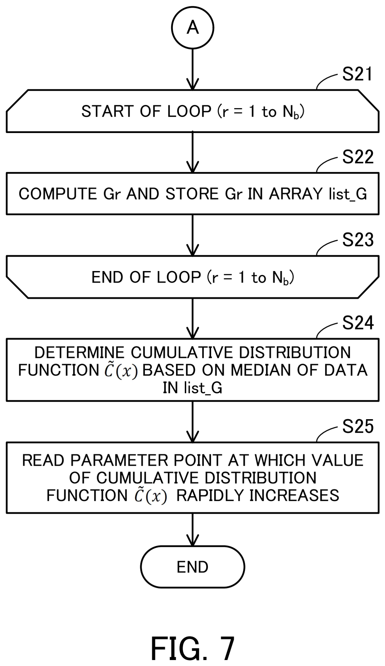

FIG. 7 is a flowchart illustrating continuation of the processing example of the quantum computing system.

(S21) The discrete Fourier transform execution unit 150 starts a loop including step S22 for r = 1 to N_{b}.

(S22) The discrete Fourier transform execution unit 150 computes Gᵣ in Equation (26) and stores the computed Gᵣ in an array list_G.

(S23) The discrete Fourier transform execution unit 150 ends the loop for r = 1 to N_{b}.

(S24) The median computation unit 160 determines the cumulative distribution function C~(x) based on the median of the data in list_G.

(S25) The cumulative distribution function analysis unit 170 reads a parameter point x* at which the value of the cumulative distribution function C^{~}(x) rapidly increases. The cumulative distribution function analysis unit 170 estimates the energy level difference ΔE by dividing x* by τ. The cumulative distribution function analysis unit 170 outputs ΔE. Then, the processing of the quantum computing system 300 ends.

The cumulative distribution function analysis unit 170 is able to acquire x* based on the cumulative distribution function C^{~}(x) as follows, for example.

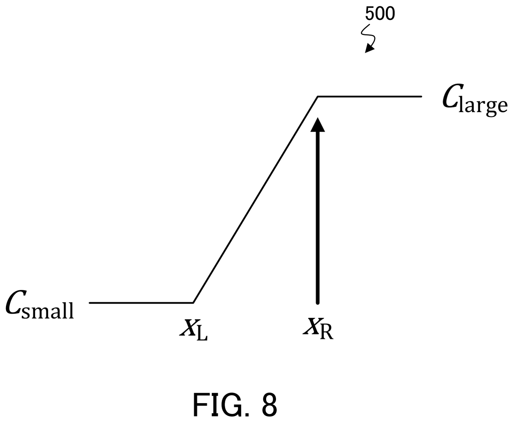

FIG. 8 is a diagram illustrating an example of binary search executed on a cumulative distribution function.

The cumulative distribution function analysis unit 170 determines an x coordinate at which the value of the cumulative distribution function C^{~}(x) rapidly increases. A graph 500 is an example of the cumulative distribution function C∼(x). It is defined that C∼(x) = Cₛₘₐₗₗ when x < x_{L} and that C^{~}(x) = C_{large} when x > x_{R} near the position where the value of C^{~}(x) rapidly increases. This definition means that the cumulative distribution function rapidly increases from Cₛₘₐₗₗ to C_{large} from x_{L} to x_{R}.

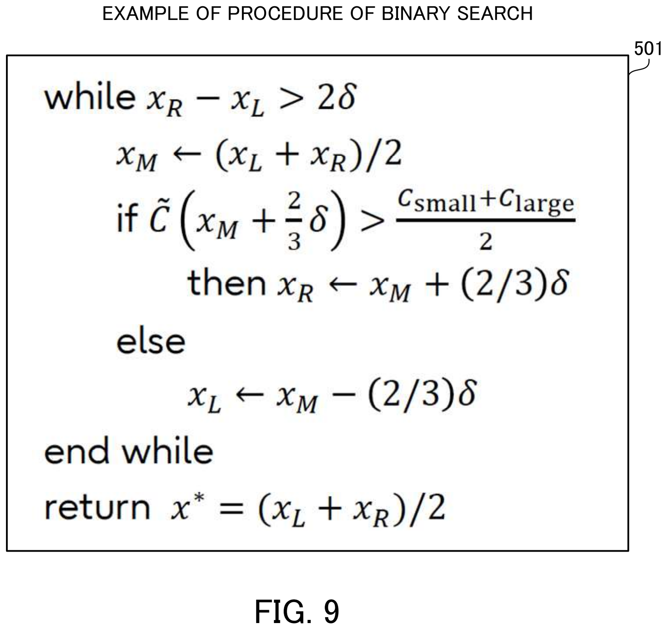

FIG. 9 is an example of the procedure of the binary search. An algorithm 501 represents a procedure of searching the graph 500 for x*. In this algorithm 501, δ = τε_{ΔE}. The algorithm 501 represents the following procedure.

When x_{R} - x_{L} > 2δ, the following processing is repeatedly executed.

(x_{L} + x_{R})/2 is substituted into x_{M}. If C^{~} (x_{M} + (2/3) δ) is greater than (Cₛₘₐₗₗ + C_{large}) /2, the value of x_{R} is updated to x_{M} + (2/3) δ. If C^{~} (x_{M} + (2/3) δ) is less than or equal to (Cₛₘₐₗₗ + C_{large}) /2, the value of x_{L} is updated to x_{M} - (2/3) δ.

Then, if x_{R} - x_{L} ≤ 2δ, x* = (x_{L} + x_{R}) /2 is returned.

The cumulative distribution function analysis unit 170 is able to acquire the parameter point x* at which the value of the cumulative distribution function C^{~}(x) rapidly increases based on the algorithm 501.

The process of the quantum computing system 300 was verified by a numerical simulation. In the numerical simulation, an antiferromagnetic Heisenberg model was used as a specific system. The antiferromagnetic Heisenberg model is a basic theoretical model for describing the quantum mechanical behavior of a magnetic material. In the numerical simulation, a case in which a minute external magnetic field was added to the antiferromagnetic Heisenberg model was verified.

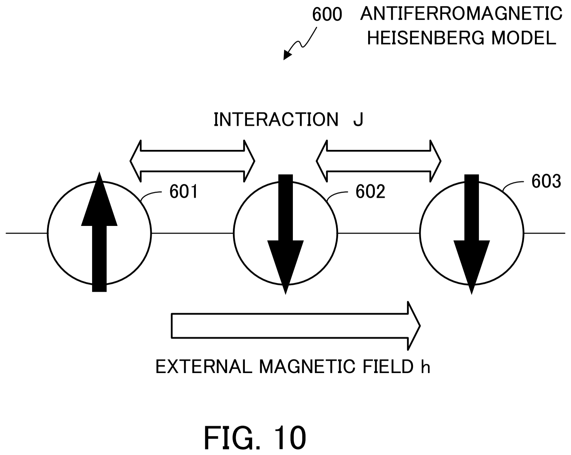

FIG. 10 is a diagram illustrating an example of an antiferromagnetic Heisenberg model. In this antiferromagnetic Heisenberg model 600, sites 601, 602, and 603 are provided on lattice points. A spin is defined in each of the sites 601, 602, and 603. An interaction acts between adjacent spins. Using the antiferromagnetic Heisenberg model 600, it is possible to compute the spin directions of the sites 601, 602, and 603 when an external magnetic field is applied by a numerical simulation. For example, the Hamiltonian H of the antiferromagnetic Heisenberg model 600 is expressed by Equation (30). $H = J {\sum }_{j} \left({X}_{j}{X}_{j + 1}+{Y}_{j}{Y}_{j + 1}+{Z}_{j}{Z}_{j + 1}\right) + h {\sum }_{j} {Z}_{j}$

In Equation (30), Xᵢ, Yᵢ, and Zᵢ are each a Pauli operator at a site i. The Pauli operator is an operator that describes a spin component. That is, Xᵢ is a Pauli operator that describes the X-direction component of the spin at the i-th site. Yᵢ is a Pauli operator that describes the Y-direction component of the spin at the i-th site. Zᵢ is a Pauli operator that describes the Z-direction component of the spin at the i-th site. J is a parameter representing the Heisenberg interaction. J is a real number. h is a parameter representing a minute external magnetic field. h is a real number.

In the numerical simulation, the difference between the energy levels before and after the application of the minute external magnetic field is estimated based on the quantum circuit 60 related to the Hamiltonian H in Equation (30). The parameter for the minute shift is h. The difference between the energy level corresponding to h = 0 and the energy level corresponding to h ≠ 0 is computed. The computation conditions are as follows.

The assumed antiferromagnetic Heisenberg model 600 is a five-site one-dimensional model. J = 1.0. The value of h when h ≠ 0 is h = 0.1. The initial state |ψ> is a state in which exp (i(π/20)Y₀) is applied to the ground state when the external magnetic field is zero (h = 0). The action of exp (i(π/20)Y₀) corresponds to an operation of minutely rotating the zeroth spin. This operation was performed to intentionally add the contribution of the excited state. The initial state |ψ> may be prepared numerically using an iterative method.

In addition, the following assumptions were made in the numerical simulation. The number of times of execution of the quantum circuit is infinite, and it is possible to ignore the measurement fluctuation. When the sampling times of various orders are infinite, it is possible to ignore the sampling error.

Further, ε_{ΔE} = 0.01. ε_{ΔE} is a target error for the energy level difference. τ = 1.0. τ is the time step of the time evolution. In addition, the expansion coefficient when performing approximate discrete Fourier expansion on the step function F with a period of 2π includes a parameter β. The parameter β dominates the accuracy of the approximation. As β is larger, the accuracy of the expansion coefficient is improved. In this example, β = 700. The expansion coefficient when performing approximate discrete Fourier expansion on the step function F with a period of 2π is expressed by Equation (31). $\left\{\begin{matrix}{\hat{F}}_{0} = \frac{1}{2} & \\ {\hat{F}}_{2 j + 1} = - i \sqrt{\frac{β}{2 π}} {e}^{- β} \frac{{I}_{j} \left(β\right) + {I}_{j + 1} \left(β\right)}{2 j + 1} & \left(j<d\right) \\ {\hat{F}}_{2 d + 1} = - i \sqrt{\frac{β}{2 π}} {e}^{- β} \frac{{I}_{d} \left(β\right)}{2 d + 1} & \end{matrix}\right.$

Iⱼ(β) is a modified Bessel function of the first kind of order j. The expression F^₂ⱼ₊₁ = ... at the center in Equation (31) is a value when j < d. When j is an even number other than 0, Fⱼ = 0.

As a result of the numerical simulation based on the above computation conditions, the following cumulative distribution function was obtained.

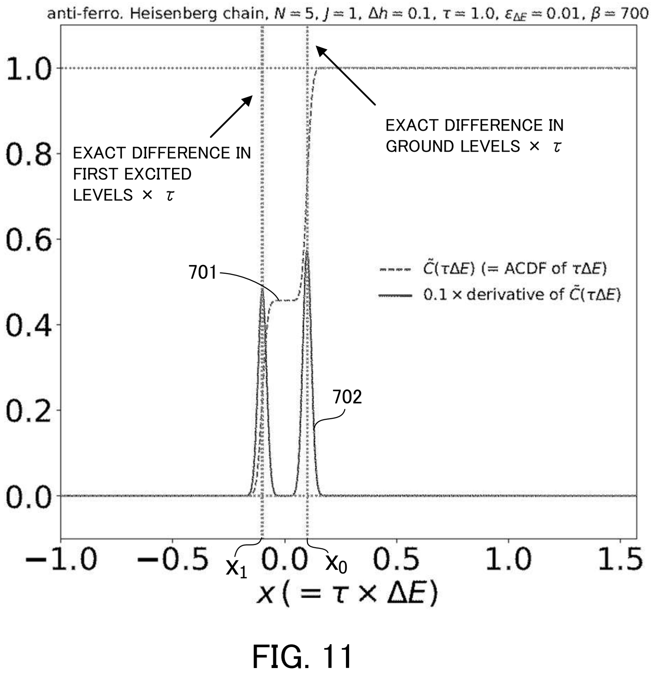

FIG. 11 is a diagram illustrating an example of a cumulative distribution function. A graph 701 represents the cumulative distribution function C^{~}(x) = C~(τΔE) in Equation (6) obtained based on the computation conditions described in FIG. 10. A graph 702 represents the derivative of C^{~}(x). However, the graph 702 has been normalized so that 0.1 times the derivative of C^{~}(x) is output as a value of 1 or less. The horizontal axis (x axis) of each of the graphs 701 and 702 represents the energy level difference ΔE × τ. Note that "ACDF" is an abbreviation for "approximate cumulative distribution function".

Further, x = x₀ is a value obtained by multiplying an exact difference (E₀(h = 0) - E₀(h = 0.1)) in ground levels computed by exactly diagonalizing the Hamiltonian by τ. x = x₁ is a value obtained by multiplying an exact difference (E₁(h = 0) - E₁(h = 0.1)) in first excited levels computed by exactly diagonalizing the Hamiltonian by τ. The "ground level" indicates the energy level in the ground state. The "first excited level" indicates the energy level in the first excited state.

The value of the cumulative distribution function C^{~}(x) represented in the graph 701 increases rapidly at two positions. These positions where the value of the cumulative distribution function C~(x) rapidly increases correspond to the peak positions of the derivative of C~(x)represented in the graph 702. The graph 702 has two peaks.

The right-side position where the value of the cumulative distribution function C~(x)rapidly increases coincides with the position corresponding to the energy level difference exactly computed for the ground levels (i.e., x = x₀). That is, the right-side peak position of the graph 702 coincides with x = x₀. The left-side position where the value of the cumulative distribution function C^{~}(x) rapidly increases coincides with the position corresponding to the energy level difference exactly computed for the first excited levels (that is, x = x₁). That is, the left-side peak position of the graph 702 coincides with x = x₁.

Therefore, the cumulative distribution function analysis unit 170 is able to obtain ΔE₀ = E₀(h = 0) - E₀(h = 0.1) by reading the value x₀* of the x coordinate corresponding to the right-side position where the value of the cumulative distribution function C~(x) rapidly increases and dividing x₀* by τ. In addition, the cumulative distribution function analysis unit 170 is able to obtain ΔE₁ = E₁(h = 0) - E₁(h = 0.1) by reading the value x₁* of the x coordinate corresponding to the left-side position where the value of the cumulative distribution function C^{~}(x) rapidly increases, and dividing x₁* by τ.

In the binary search on the cumulative distribution function C~(x), the cumulative distribution function analysis unit 170 is able to distinguish the difference between the energy levels related to the ground state and the difference between the energy levels related to the first excited state as follows. The cumulative distribution function analysis unit 170 determines a section having the maximum increase, among the sections in which the cumulative distribution function C~(x) rapidly increases. The cumulative distribution function analysis unit 170 determines that the determined portion is the energy level difference corresponding to the eigenstate having the maximum overlap with the input state. That is, when the input state is close to the ground state, the portion where the increase is maximum corresponds to the energy level difference in the ground state. In the example of the graph 701, the initial state is a state close to the ground state. Therefore, the cumulative distribution function analysis unit 170 is able to associate the right-side position where the increase is larger, of the two positions where C~(x) rapidly increases, with the energy level difference in the ground state.

Regarding the ground state, specific values of the energy levels and the difference therebetween are as follows. The exact value of the ground-state energy level at h = 0 is E₀(h = 0) = -7.711. The exact value of the ground-state energy level when h = 0.1 is E₀(h = 0.1) = -7.811.

The exact value of the difference between E₀ (h = 0) = and E₀(h = 0.1) is ΔE₀ = 0.100. The relative ratio of the difference to the absolute value of the ground-state energy level is ΔE₀/|E₀| ≈ 1/80.

When the target error ε_{ΔE} for the energy level difference is fixed, the truncation order d needed in the method according to the second embodiment is reduced to ΔE₀/|E₀| ≈ 1/80 times, as compared with the case where E₀(h = 0) and E₀(h = 0.1) are individually obtained by SPE described above. Therefore, the maximum depth D(∝d) needed for the quantum circuit 60 is also reduced to ΔE₀/|E₀| ≈ 1/80 times.

### [Modification]

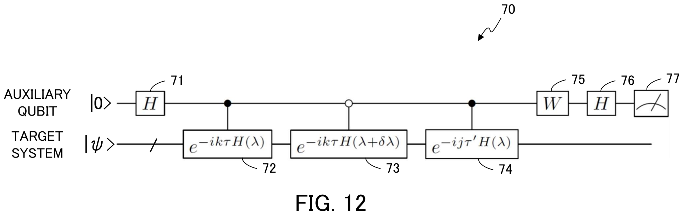

FIG. 12 is a diagram illustrating a modification of the quantum circuit according to the second embodiment. The quantum computing system 300 may use a quantum circuit 70, instead of the quantum circuit 60. The quantum circuit 70 is useful when the initial state |ψ> does not have a large overlap with a single eigenstate, i.e., when the initial state |ψ> is a superposition of various states.

The quantum circuit 70 includes a Hadamard gate 71, control gates 72, 73, 74, a quantum gate 75, a Hadamard gate 76, and a measurement 77. A quantum gate operation is performed sequentially from the left side of the quantum circuit 70, that is, sequentially from the Hadamard gate 71 to the measurement 77.

An auxiliary qubit is initialized to |0>. The Hadamard gate 71 acts on the auxiliary qubit.

The control gate 72 is a positive polarity control unitary gate controlled by the auxiliary qubit. The control gate 72 applies a time-evolution operator e^{-ikτH(λ)} to a qubit group corresponding to a quantum state |ψ> of the target system. τ is the time step of the time evolution for estimating the energy level difference. As the value of τ, a value for estimating the energy level difference is determined in advance. k is an integer by which τ is multiplied. The range of k is -d ≤ k ≤ d. As described above, d is the truncation order of the discrete Fourier transform for estimating the energy level difference.

The control gate 73 is a negative polarity control unitary gate controlled by the auxiliary qubit. The control gate 73 applies a time-evolution operator e^{-ikτH(λ+δλ)} to the qubit group of the target system.

The control gate 74 is a positive polarity control unitary gate controlled by the auxiliary qubit. The control gate 74 applies a time-evolution operator e^{-ijτ'H(λ)} to the qubit group of the target system. τ' is the time step of the time evolution for the energy level estimation. As the value of τ', a value for the energy level estimation is determined in advance. j is an integer by which τ' is multiplied. The range of j is -d' ≤ j ≤ d'. d' is the truncation order of the discrete Fourier transform for the energy level estimation. d and d' are determined by the truncation order determination unit 130. A method of determining d and d' will be described below. The positive and negative polarities of the control gates 72, 73, and 74 may be reversed.

The quantum gate 75 acts on the auxiliary qubit. The quantum gate 75 is represented by "W". W = I or W = S^{†}. W = I means that the quantum gate 75 is an I gate. W = I is equivalent to inserting nothing at the position of the quantum gate 75. That is, W = I is equivalent to the quantum circuit 70 not including the quantum gate 75. W = S^{†} means that the quantum gate 75 is an S^{†} gate.

The Hadamard gate 76 acts on the auxiliary qubit.

The measurement 77 is a projective measurement in the computational basis on the auxiliary qubit. When W = I, the real part of the probability amplitude <ψ|e^{ikτH(λ+δλ)} e^{-ijτ'H(λ)} e^{-ikτH(λ)} |ψ> is measured. When W = S^{†}, the imaginary part of the probability amplitude <ψ | e^{ikτH(λ+δλ)} e^{-ijτ'H(λ)} e^{-ikτH(λ)} |ψ> is measured. The probability amplitude <ψ|e^{ikτH(λ+δλ)} e^{-ijτ'H(λ)} e^{-ikτH(λ)} |ψ> is expressed by Equation (32) . $\begin{matrix}\left〈ψ\right| {e}^{ikτH \left(λ+δλ\right)} {e}^{- ijτ ′ H \left(λ\right)} {e}^{- ikτH \left(λ\right)} \left|ψ\right〉 \\ = {\sum }_{mn} {e}^{- i \left[{kτE}_{m}\left(λ\right)-{kτE}_{n}\left(λ+δλ\right)+jτ′{E}_{m}\left(λ\right)\right]} \\ \times \left〈\left.ψ\right|{E}_{m}\left(λ\right)\right〉 \left〈{E}_{m}\left(λ\right)\left|{E}_{n}\left(λ+δλ\right)\right〉\left〈{E}_{n}\left(λ+δλ\right)\right|\right. \left.{E}_{m}\left(λ\right)\right〉 \left〈{E}_{m}\left(λ\right)\right| \left.ψ\right〉\end{matrix}$

The probability amplitude in Equation (32) is a probability amplitude corresponding to an event that a result of applying the first time-evolution operator, the second time-evolution operator, and the third time-evolution operator to the quantum state |ψ> of the target system matches the original quantum state |ψ>.

The quantum circuit control unit 120 causes the quantum computer 200 to execute the quantum circuit 70. The measurement result storage unit 110 stores the probability amplitude measurement results in Equation (32) in accordance with the execution of the quantum circuit 70.

The discrete Fourier transform execution unit 150 multiplies the probability amplitude measurement result by F^ⱼ and F^ₖ, to execute the discrete Fourier transform. The discrete Fourier transform is expressed by Equation (33). $\begin{matrix}{C}^{˜} \left(x, y\right) \\ = {\sum }_{\left|j\right| \leq d ′} {\sum }_{\left|k\right| \leq d} {\hat{F}}_{j} {\hat{F}}_{k} {e}^{ijy} {e}^{ikx} \left〈ψ\right| {e}^{ikτH \left(λ+δλ\right)} {e}^{- ijτ ′ H \left(λ\right)} {e}^{- ikτH \left(λ\right)} \left|ψ\right〉 \\ = {\sum }_{mn} \left(F∗δ\right) \left(x-τ\left[{E}_{m}\left(λ\right)-{E}_{n}\left(λ+δλ\right)\right]\right) \times \left(F∗δ\right) \left[y-τ′{E}_{m}\left(λ\right)\right] \\ \times \left〈ψ\right| \left.{E}_{m}\left(λ\right)\right〉 \left〈{E}_{m}\left(λ\right)\left|{E}_{n}\left(λ+δλ\right)\right〉\left〈{E}_{n}\left(λ+δλ\right)\right|\right. \left.{E}_{m}\left(λ\right)\right〉 \left〈{E}_{m}\left(λ\right)\left|ψ\right〉\right.\end{matrix}$

F^ⱼ and F^ₖ are discrete Fourier expansion coefficients of the step function F. F^ⱼ and F^ₖ are computed by the Fourier expansion coefficient computation unit 140.

The computation result in Equation (33) approximates the joint cumulative distribution function of the energy levels and the energy level difference under the assumption of δλ << 1. The joint cumulative distribution function C^{~}(x, y) is expressed by Equation (34). $\begin{matrix}{C}^{˜} \left(x, y\right) = {\sum }_{k} {\left|\left〈{E}_{k}\left(λ+δλ\right)\right|\left.{E}_{k}\left(λ\right)\right〉\right|}^{2} {\left|\left〈{E}_{k}\left(λ\right)\left|ψ\right.\right〉\right|}^{2} \\ \times \left({F}_{2}∗{δ}_{2}\right) \left(x-τ\left[{E}_{k}\left(λ\right)-{E}_{k}\left(λ+δλ\right)\right],y-τ′{E}_{k}\left(λ\right)\right)\end{matrix}$

δ₂ = δ₂ (x, y) is a two-variable delta function. F₂ = F₂ (x, y) is a two-variable step function. F₂ (x, y) is a product of a one-variable step function F(x) and a one-variable step function F(y). That is, F₂(x, y) is expressed by Equation (35). ${F}_{2} \left(x, y\right) = F \left(x\right) ⋅ F \left(y\right)$

The discrete Fourier transform execution unit 150 computes N_{b} samples of Gᵣ(x, y) in the same manner as described above. Gᵣ(x, y) is obtained by expanding Gᵣ = Gᵣ(x) in Equation (26) to two variables. The median computation unit 160 obtains the joint cumulative distribution function C∼(x, y) by computing the median of N_{b} samples of Gᵣ(x, y). C~(x, y) is a two-dimensional cumulative distribution function.

The cumulative distribution function analysis unit 170 is able to simultaneously estimate the energy levels and the difference therebetween from the position where the value of the joint cumulative distribution function C~(x, y) rapidly increases. For example, when the value of C~(x, y) rapidly increases at (x*, y*), the cumulative distribution function analysis unit 170 is able to determine that the difference ΔE = x*/τ corresponds to the eigenstate of the energy level E = y*/τ'. As described above, by using the quantum circuit 70, the quantum computing system 300 is able to appropriately determine the correspondence relationship between ΔEk and the eigenstate k even when the initial state |ψ> is a superposition of various states.

Note that the truncation order determination unit 130 determines the truncation order d based on Equation (36). $d = O \left({τ}^{- 1}{ϵ}_{Δ {E}_{k}}^{- 1}\right)$

ε_{ΔE_k} is a target error for the energy level difference ΔEₖ.

The truncation order determination unit 130 determines the truncation order d' based on Equation (37). $d ′ = O \left(τ{′}^{- 1}{ϵ}_{{E}_{k}}^{- 1}\right)$

ε_{E_k} is a target error for the energy level Eₖ.

The time step τ is determined in advance based on Equation (38). $τ \leq \frac{π}{3} {\left(Δ{E}_{k}\right)}^{- 1}$

The time step τ' is determined in advance based on Equation (39). $τ ′ \leq \frac{π}{3} {\left|{E}_{k}\right|}^{- 1}$

The values of τ, τ', ε_{ΔE_k}, and ε_{E_k} are included in the input information. The input information is input to the classical computer 100. The truncation order determination unit 130 computes d and d' based on the values of τ, τ', ε_{ΔE_k}. and ε_{E_k} included in the input information. In this case, it is possible to set d' in Equation (37) to be smaller than the truncation order expressed by Equation (15). Therefore, also in the modification, the quantum computing system 300 is able to reduce the depth of the quantum circuit 70.

### [Comparative Example]

As a comparative example compared with the second embodiment, a method of individually obtaining E(λ) and E(λ + δλ) by SPE is conceivable.

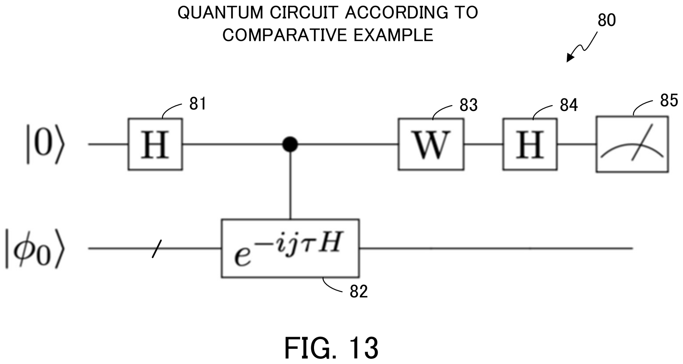

FIG. 13 is a diagram illustrating a quantum circuit according to a comparative example. This quantum circuit 80 according to the comparative example includes a Hadamard gate 81, a control gate 82, a quantum gate 83, a Hadamard gate 84, and a measurement 85. A quantum gate operation is sequentially performed from the left side of the quantum circuit 80.

An auxiliary qubit is initialized to |0>. The Hadamard gate 81 acts on the auxiliary qubit. The control gate 82 is a positive polarity control unitary gate controlled by the auxiliary qubit. The control gate 82 applies a time-evolution operator e^{-ijτH} to a qubit group corresponding to a quantum state |φ₀> of the target system. The quantum gate 83 acts on the auxiliary qubit. The quantum gate 83 is represented by "W". W = I or W = S^{†}. The Hadamard gate 84 acts on the auxiliary qubit. The measurement 85 is a projective measurement in the computational basis on the auxiliary qubit.

A probability amplitude <φ₀ | e^{-ijτH} | φ₀> is measured by using the quantum circuit 80. When W = I, the real part of the probability amplitude <φ₀ | e^{-ijτH} | φ₀> is measured. When W = S^{†}, the imaginary part of the probability amplitude <φ₀ | e^{-ijτH} | φ₀> is measured.

Based on the probability amplitude <φ₀ | e^{-ijτH} | φ₀>, the cumulative distribution function C in Equation (12) is obtained. In the comparative example, E(λ) and E(λ + δλ) are individually computed by using the quantum circuit 80. For example, E(λ) is computed based on the probability amplitude obtained as H = H(λ) by the quantum circuit 80. E(λ + δλ) is computed based on the probability amplitude obtained as H = H(λ + δλ) by the quantum circuit 80. The energy level difference is computed by computing the difference between the individually computed E(λ) and E(λ + δλ).

However, in the method of the comparative example, as represented by Equation (15), the depth D (∝d) that is larger by several orders of magnitude than the reciprocal (ε_{ΔE_k}/Δ_{Ek}) ^ (-1) of the relative accuracy needed for the energy level difference is needed.

Therefore, the quantum computing system 300 directly estimates the energy level difference ΔE by using the quantum circuit 60. When ΔE is directly estimated, the depth D needed for the quantum circuit 60 is expressed by Equation (9). Comparing Equation (9) with Equation (15), Equation (9) does not include a factor several orders of magnitude represented by Equation (17). Therefore, according to the quantum computing system 300, the depth of the quantum circuit is reduced by several orders of magnitude, as compared with the method according to the comparative example.

The execution time per quantum gate is, for example, several nanoseconds to several hundred nanoseconds. The greater the depth of the quantum circuit is, the greater the computation time will be. In addition, since one quantum computation needs to be completed within the duration of a qubit, the quantum computation may fail to be complete if the depth of the quantum circuit is excessively large. In addition, an error occurs at a certain probability per quantum gate. Thus, the error probability of the output of the quantum circuit increases as the depth of the quantum circuit increases. To address such a problem, the quantum computing system 300 increases the likelihood of completing the quantum computation within the duration of a qubit by reducing the depth of the quantum circuit. The quantum computing system 300 is able to reduce the error probability of the output of the quantum circuit by reducing the depth of the quantum circuit.

As described above, the quantum computing system 300 is able to obtain an accuracy-guaranteed estimated value of an energy level difference with respect to a minute shift of a parameter in a quantum many-body system simulated on the quantum computer 200.

In addition, when estimating an energy level difference with respect to a minute shift of a parameter of a quantum system by using a quantum computer, the quantum computing system 300 is able to implement a quantum circuit at a depth of about a reciprocal of the relative accuracy with respect to the difference. In particular, the quantum computing system 300 is able to remove the dependency on the small shift amount from the needed relative accuracy and reduce the order of the Fourier component needed for the statistical processing by directly estimating the energy level difference, instead of estimating the energy levels themselves. As a result, the quantum computing system 300 is able to reduce the depth of the quantum circuit.

In the estimation of the energy level difference in the antiferromagnetic Heisenberg model described above as an example, it was confirmed that it is possible to reduce the maximum depth needed for the quantum circuit to about 1/80, as compared with the method according to the comparative example. The quantum computing system 300 is able to reduce the depth of the quantum circuit more than the method according to the comparative example without deteriorating the estimation accuracy when estimating the energy level difference with respect to the minute shift of the parameter.

When a large-scale FTQC is used instead of an early FTQC, which is a medium-scale quantum computer, BPDE may be used to estimate the difference between energy levels. In BPDE, a quantum circuit is used to estimate a probability amplitude relating to a time-evolution operator. In BPDE, an ancilla rotation angle is updated based on Bayesian inference.

However, when BPDE is used, there are problems that analytical energy level separation is impractical, highly accurate control is needed for ancilla rotation, and the depth of a quantum circuit increases compared to phase estimation.

On the other hand, with the quantum computing system 300 according to the second embodiment, analytical energy level separation is possible. In the quantum computing system 300, control of ancilla rotation is not needed. Furthermore, in the quantum computing system 300, the truncation order of the discrete Fourier transform is reduced, and the depth of the quantum circuit is reduced.

As described above, the quantum computing system 300 according to the second embodiment is able to estimate the difference between energy levels more efficiently than the method according to the comparative example, that is, the method of estimating the difference between energy levels by using the result of SPE. In addition, the quantum computing system 300 is able to estimate the difference between energy levels more efficiently than BPDE.

The quantum computing system 300 may include, instead of the quantum computer 200, an apparatus including a quantum circuit simulator that simulates execution of a quantum circuit in the quantum computer 200. In this case, the quantum computing system 300 is able to perform the processing of the second embodiment by using the quantum circuit simulator, instead of the quantum computer 200.

The quantum computing system 300 executes, for example, the following processing. The processor 101 causes the quantum computer 200 or the quantum circuit simulator to execute the quantum circuit 60. The quantum circuit 60 includes the Hadamard gate 61, the control gate 62, the control gate 63, the Hadamard gate 65, and the measurement 66 in this order. Here, the Hadamard gate 61 is a first Hadamard gate. The control gate 62 is a first control gate. The control gate 63 is a second control gate. The Hadamard gate 65 is a second Hadamard gate.

The Hadamard gate 61 acts on the auxiliary qubit. The control gates 62 and 63 are controlled by the auxiliary qubit. The control gate 62 has a first polarity. The control gate 63 has a second polarity opposite to the first polarity. The control gate 62 applies a first time-evolution operator corresponding to a first Hamiltonian including a predetermined parameter to a qubit group corresponding to a quantum state |ψ> of the target system. The control gate 63 applies a second time-evolution operator corresponding to a second Hamiltonian, to which change of the parameter in the first Hamiltonian has been applied, to the qubit group. The Hadamard gate 65 acts on the auxiliary qubit. The measurement 66 is measurement of the auxiliary qubit. The processor 101 acquires, as an execution result of the quantum circuit 60 by the quantum computer 200 or the quantum circuit simulator, a probability amplitude corresponding to an event that a result of applying the first time-evolution operator and the second time-evolution operator to the quantum state |ψ> matches the original quantum state |ψ>. The processor 101 acquires a cumulative distribution function for the energy level difference based on the first Hamiltonian and the second Hamiltonian, by performing discrete Fourier transform by using the probability amplitude. The processor 101 estimates the difference based on the cumulative distribution function.

In this way, the quantum computing system 300 is able to reduce the depth of the quantum circuit. Specifically, since the quantum computing system 300 directly estimates the difference between energy levels, the constraint on τ is significantly relaxed compared to the method according to the comparative example, as indicated by Equation (20). That is, according to the quantum computing system 300, it is possible to increase τ by several orders of magnitude as represented by Equation (17), as compared with the method according to the comparative example. As a result, the quantum computing system 300 is able to reduce the truncation order d of the discrete Fourier transform, as indicated in Equations (9) and (21). The truncation order d and the depth D of the quantum circuit have a relationship of D ∝ d. Therefore, the depth D of the quantum circuit is reduced by reducing the truncation order d.

It is possible to generalize the difference estimated by the quantum computing system 300 to a forward difference, a backward difference, a central difference, or a higher-order difference.

The processor 101 inserts an identity gate or a phase shift gate at a predetermined position of the quantum circuit 60. The predetermined position is, for example, the position of the quantum gate 64. The processor 101 acquires the real part of the probability amplitude from the quantum computer 200 or the quantum circuit simulator by causing the quantum computer 200 or the quantum circuit simulator to execute the quantum circuit 60 into which the identity gate has been inserted. The processor 101 acquires the imaginary part of the probability amplitude from the quantum computer 200 or the quantum circuit simulator by causing the quantum computer 200 or the quantum circuit simulator to execute the quantum circuit 60 into which the phase shift gate has been inserted. In this way, the quantum computing system 300 is able to efficiently acquire the probability amplitude.

In addition, the processor 101 receives input of the target error ε_{ΔE} for the energy level difference and the time step τ of the time evolution in the first time-evolution operator and the second time-evolution operator. The processor 101 computes the truncation order d of the discrete Fourier transform based on the target error ε_{ΔE} and the time step τ.

Thus, the quantum computing system 300 is able to reduce the depth of the quantum circuit. As described above, according to the quantum computing system 300, it is possible to increase τ as compared with the method according to the comparative example. As a result, the truncation order d is reduced, and the depth D of the quantum circuit is reduced.

In the estimation of the energy level difference, the processor 101 determines a value x* of a variable x at a position where the value of the cumulative distribution function C^{~}(x) increases, the value x* of the variable x being a value of the variable x of the cumulative distribution function C^{~}(x), based on a predetermined algorithm. The processor 101 computes the difference by dividing the determined value x* of the variable x by the time step τ. Thus, the quantum computing system 300 is able to efficiently estimate the difference energy level. The processor 101 may determine the value x* of the variable x at a position where the value of the cumulative distribution function increases, for example, by a binary search such as the algorithm 501. The processor 101 may determine the value x* of the variable x at a position where the value of the cumulative distribution function increases based on an algorithm of determining a peak position of the derivative of the cumulative distribution function and acquiring the value of the variable x at the peak position.

The index of the first time-evolution operator and the index of the second time-evolution operator include a product of a time step τ and a first integer value. The processor 101 stochastically selects a first integer value from a plurality of integer values (-d to d) whose absolute values are equal to or less than the truncation order d, based on a plurality of discrete Fourier expansion coefficients F^ⱼ(j ∈ [-d, d]) used for discrete Fourier transform. The plurality of discrete Fourier expansion coefficients F^(j ∈ [-d, d]) correspond to the plurality of integer values (-d to d). Specifically, the processor 101 selects the integer value j as the first integer value, with a probability proportional to the absolute value |F^ⱼ| of the discrete Fourier expansion coefficient F^ⱼ of the order corresponding to the integer value j.

Thus, the quantum computing system 300 is able to efficiently acquire the probability amplitude. That is, it is sufficient for the quantum computing system 300 to use N_{b}Ns samples to obtain the sum in the form of Σⱼ=-_{d}^{d}... in Equation (27), instead of using all of the generally large number of quantum circuits of 2d. Therefore, the number of acquired samples for the probability amplitude, that is, the number of repetitions of steps S16 to S20, is reduced. However, in compensation for the probabilistic sampling, the processor 101 allows the estimation to fail with a probability equal to or less than the allowable value v.

The processor 101 repeatedly performs a first process of selecting the first integer value j and a second process of causing the quantum computer 200 or the quantum circuit simulator to execute the quantum circuit 60 based on the first integer value j. Thus, the quantum computing system 300 is able to efficiently perform the sampling for the probability amplitude. Specifically, the quantum computing system 300 is able to relatively reduce the number of repetitions of the first process and the second process, that is, the number of times of the sampling. As a result, the quantum computing system 300 is able to speed up the estimation of the energy level difference.

The quantum circuit 70 may further include a control gate 74 of a first polarity controlled by the auxiliary qubit. The control gate 74 may be referred to as "third control gate". The control gate 74 applies a third time-evolution operator corresponding to the first Hamiltonian and having a time step τ' of the time evolution different from those of the first time-evolution operator and the second time-evolution operator to the qubit group. The processor 101 acquires, as an execution result of the quantum circuit 70 by the quantum computer 200 or the quantum circuit simulator, a probability amplitude corresponding to an event that a result of applying the first time-evolution operator, the second time-evolution operator, and the third time-evolution operator to the quantum state |ψ> matches the quantum state |ψ>. The processor 101 executes discrete Fourier transform using the probability amplitude to acquires a joint cumulative distribution function of an energy level difference between the first Hamiltonian and the second Hamiltonian and an energy level corresponding to the first Hamiltonian. The processor 101 estimates the difference and an energy level corresponding to the difference and the first Hamiltonian, based on the joint cumulative distribution function.

In this way, the quantum computing system 300 is able to appropriately determine the correspondence relationship between ΔEₖ and the eigenstate k corresponding to the energy level Eₖ even when the initial state |ψ> is a superposition of various states.

Although the embodiments have been described above as examples, the configuration of each unit described in the embodiments may be replaced by another configuration having the same function. Any other components or steps may be added. Furthermore, any two or more configurations (features) of the above-described embodiments may be combined.

In one aspect, it is possible to reduce the depth of a quantum circuit.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A computer program that causes a computer to execute a process comprising:
causing a quantum computer (20) or a quantum circuit simulator to execute a quantum circuit (30) including a first Hadamard gate (31) that acts on an auxiliary qubit, a first control gate (32) controlled by the auxiliary qubit, has a first polarity, and applies a first time-evolution operator corresponding to a first Hamiltonian including a predetermined parameter to a qubit group corresponding to a quantum state of a target system, a second control gate (33) controlled by the auxiliary qubit, has a second polarity opposite to the first polarity, and applies a second time-evolution operator corresponding to a second Hamiltonian, to which change of the parameter of the first Hamiltonian has been applied, to the qubit group, a second Hadamard gate (35) that acts on the auxiliary qubit, and measurement (36) of the auxiliary qubit;
acquiring, as an execution result of the quantum circuit by the quantum computer or the quantum circuit simulator, a probability amplitude corresponding to an event that a result of applying the first time-evolution operator and the second time-evolution operator to the quantum state matches the quantum state;
performing a discrete Fourier transform using the probability amplitude to acquire a cumulative distribution function (40) for an energy level difference between the first Hamiltonian and the second Hamiltonian; and
estimating the difference based on the cumulative distribution function.

2. The computer program according to claim 1, wherein the process further includes:
receiving input of a target error for the difference and a time step of time evolution in the first time-evolution operator and the second time-evolution operator, and
computing a truncation order of the discrete Fourier transform based on the target error and the time step.

3. The computer program according to claim 2, wherein the estimating of the difference includes determining a value of a variable of the cumulative distribution function (40) at a position where the value of the cumulative distribution function increases based on a predetermined algorithm, and computing the difference by dividing the determined value of the variable by the time step.

4. The computer program according to claim 2 or 3, wherein
an index of the first time-evolution operator and an index of the second time-evolution operator include a product of the time step and a first integer value, and
the process further includes:
stochastically selecting the first integer value from a plurality of integer values whose absolute values are equal to or less than the truncation order, based on a plurality of discrete Fourier expansion coefficients used for the discrete Fourier transform and corresponding to the plurality of integer values.

5. The computer program according to claim 4, wherein the process further includes:
repeatedly performing a first process of selecting the first integer value and a second process of causing the quantum computer (20) or the quantum circuit simulator to execute the quantum circuit (30) based on the first integer value.

6. The computer program according to any of the preceding claims, wherein
the quantum circuit (70) further includes a third control gate (74) of the first polarity controlled by the auxiliary qubit,
the third control gate applies a third time-evolution operator corresponding to the first Hamiltonian and having a time step of time evolution different from those of the first time-evolution operator and the second time-evolution operator to the qubit group, and
the process further includes:
acquiring, as an execution result of the quantum circuit by the quantum computer (20) or the quantum circuit simulator, the probability amplitude corresponding to an event that a result of applying the first time-evolution operator, the second time-evolution operator, and the third time-evolution operator to the quantum state matches the quantum state,
acquiring a joint cumulative distribution function of the difference and the energy level corresponding to the first Hamiltonian by performing the discrete Fourier transform using the probability amplitude, and
estimating the difference and the energy level corresponding to the difference and the first Hamiltonian, based on the joint cumulative distribution function.

7. The computer program according to any of the preceding claims, wherein the process further includes:
inserting an identity gate or a phase shift gate at a predetermined position of the quantum circuit (30),
acquiring a real part of the probability amplitude from the quantum computer or the quantum circuit simulator by causing the quantum computer (20) or the quantum circuit simulator to execute the quantum circuit into which the identity gate has been inserted, and
acquiring an imaginary part of the probability amplitude from the quantum computer or the quantum circuit simulator by causing the quantum computer or the quantum circuit simulator to execute the quantum circuit into which the phase shift gate has been inserted.

8. An energy level difference estimation method executed by a computer, the energy level difference estimation method comprising:
causing a quantum computer (20) or a quantum circuit simulator to execute a quantum circuit (30) including a first Hadamard gate (31) that acts on an auxiliary qubit, a first control gate (32) controlled by the auxiliary qubit, has a first polarity, and applies a first time-evolution operator corresponding to a first Hamiltonian including a predetermined parameter to a qubit group corresponding to a quantum state of a target system, a second control gate (33) controlled by the auxiliary qubit, has a second polarity opposite to the first polarity, and applies a second time-evolution operator corresponding to a second Hamiltonian, to which change of the parameter of the first Hamiltonian has been applied, to the qubit group, a second Hadamard gate (35) that acts on the auxiliary qubit, and measurement (36) of the auxiliary qubit;
acquiring as an execution result of the quantum circuit by the quantum computer or the quantum circuit simulator, a probability amplitude corresponding to an event that a result of applying the first time-evolution operator and the second time-evolution operator to the quantum state matches the quantum state;
performing a discrete Fourier transform using the probability amplitude to acquire a cumulative distribution function (40) for an energy level difference between the first Hamiltonian and the second Hamiltonian; and
estimating the difference based on the cumulative distribution function.

9. A quantum computing system comprising:
an apparatus that includes a quantum computer (20) or a quantum circuit simulator that executes a quantum circuit (30) including a first Hadamard gate (31) that acts on an auxiliary qubit, a first control gate (32) controlled by the auxiliary qubit, has a first polarity, and applies a first time-evolution operator corresponding to a first Hamiltonian including a predetermined parameter to a qubit group corresponding to a quantum state of a target system, a second control gate (33) controlled by the auxiliary qubit, has a second polarity opposite to the first polarity, and applies a second time-evolution operator corresponding to a second Hamiltonian, to which change of the parameter of the first Hamiltonian has been applied, to the qubit group, a second Hadamard gate (35) that acts on the auxiliary qubit, and measurement (36) of the auxiliary qubit; and
an information processing apparatus (10) that acquires, as an execution result of the quantum circuit by the quantum computer or the quantum circuit simulator, a probability amplitude corresponding to an event that a result of applying the first time-evolution operator and the second time-evolution operator to the quantum state matches the quantum state, performs a discrete Fourier transform using the probability amplitude to acquire a cumulative distribution function (40) for an energy level difference between the first Hamiltonian and the second Hamiltonian, and estimates the difference based on the cumulative distribution function.
